# EUROPEAN PATENT SPECIFICATION

(11) **EP 3 432 299 B1**
(45) Date of publication and mention of the grant of the patent: **31.05.2023**
(21) Application number: 17182373.5
(22) Date of filing: 20.07.2017
(51) Int. Cl.: G09G 3/00, G09G 3/32, H04N 13/00

(54) **DISPLAY APPARATUS AND METHOD FOR RENDERING A 3D IMAGE**
3D-BILD-RENDERVORRICHTUNG UND -VERFAHREN
APPAREIL ET MÉTHODE DE RENDU D'IMAGE 3D

(43) Date of publication of application: 23.01.2019
(73) Proprietor: Vestel Elektronik Sanayi ve Ticaret A.S., 45030 Manisa (TR)
(72) Inventor: KÍRÍSKEN,, Barbaros, 45030 Manisa (TR)
(74) Representative: Flint, Adam

(56) References cited:
- WO-A1-2017/072046
- US-A- 5 929 572
- US-A1- 2010 328 368
- US-A1- 2012 146 885
- US-A1- 2012 300 298
- US-A1- 2016 240 118
- YOICHI OCHIAI ET AL: "Pixie dust : graphics generated by levitated and animated objects in computational acoustic-potential field", ACM TRANSACTIONS ON GRAPHICS (TOG), vol. 33, no. 4, 27 July 2014 (2014-07-27), pages 1-13, XP055400922, US ISSN: 0730-0301, DOI: 10.1145/2601097.2601118
- Yoichi Ochiai: "Pixie Dust: Graphical Levitation System (2014-)", YouTube, 26 May 2014 (2014-05-26), pages 1-1, XP054977663, Retrieved from the Internet: URL:https://www.youtube.com/watch?v=NLgD3E txwdY [retrieved on 2017-08-24]
- YOICHI OCHIAI: "8-4: Invited Paper : Pixels towards Pixies: Post-Multimedia interactions with Air-Based Media", S I D INTERNATIONAL SYMPOSIUM. DIGEST OF TECHNICAL PAPERS, vol. 47, no. 1, 4 May 2016 (2016-05-04), pages 79-82, XP055400700, US ISSN: 0097-966X, DOI: 10.1002/sdtp.10615
- Instructables Arduinodexxx: "id/A-Levitating-Sphere-Rotates-Glows-and- Blinks-With-/ technology workshop craft home food play outside costumes A Levitating Sphere Rotates Glows and Blinks with Arduino A Levitating Sphere Rotates Glows and Blinks with Arduino", , 5 February 2016 (2016-02-05), XP055823618, Retrieved from the Internet: URL:https://content.instructables.com/pdfs /E5A/Z9YU/IKA07AGR/A-Levitating-Sphere-Rot ates-Glows-and-Blinks-With-.pdf [retrieved on 2021-07-13]

## Description

### Technical Field

The present disclosure relates to a display apparatus and method for rendering 3D images.

### Background

A swept volume display is a type of volumetric display device for rendering three-dimensional (3D) images, which can be either static images or video images. In such devices, a varying two-dimensional (2D) image is projected onto a rapidly moving display screen in order to create the illusion of a 3D image to a human viewer through the phenomenon of persistence of vision.

YOICHI OCHIAI ET AL, "Pixie dust : graphics generated by levitated and animated objects in computational acoustic-potential field", ACM TRANSACTIONS ON GRAPHICS (TOG), US, (20140727), vol. 33, no. 4, doi: 10.1145/2601097.2601118, ISSN 0730-0301, pages 1 - 13, XP055400922 discloses a graphics system based on the expansion of 3D acoustic-manipulation technology.

Yoichi Ochiai, "Pixie Dust: Graphical Levitation System (2014-)", YouTube, URL: https://www.youtube.com/watch?v=NLgD3EtxwdY, (20170824), XP054977663 discloses graphics generated by levitated and animated objects in computational acoustic-potential field.

YOICHI OCHIAI, "8-4: Invited Paper: Pixels towards Pixies: Post-Multimedia interactions with Air-Based Media", S I D INTERNATIONAL SYMPOSIUM. DIGEST OF TECHNICAL PAPERS, US, (20160504), vol. 47, no. 1, doi:10.1002/sdtp.10615, ISSN 0097-966X, pages 79 - 82, XP055400700 discloses methods utilizing light field and acoustic field to transform air into interactive visual media.

WO2017/072046A1 discloses a system comprising: apparatus comprising a formation of transducers, each arranged to convey pressure through a fluid above the apparatus, wherein the fluid is a gas; one or more lighting objects; and a controller configured to control the transducers in order to spatially direct a combined effect of the pressure from the transducers, and thereby levitate the one or more lighting objects in the fluid above the apparatus.

Instructables Arduinodexxx: "id/A-Levitating-Sphere-Rotates-Glows-and-Blinks-With-/ technology workshop craft home food play outside costumes A Levitating Sphere Rotates Glows and Blinks with Arduino A Levitating Sphere Rotates Glows and Blinks with Arduino", 5 February 2016, XP055823618 discloses a levitating sphere that rotates glows and blinks.

US2012/0300298A1 discloses a three-dimensional (3D) display system including at least one 3D display element containing a series of element bases. Each element base includes a plurality of light-emitting elements in a predetermined arrangement. The 3D display system also includes a moving mechanism coupled to the 3D display element for causing the 3D display element to move along a predetermined direction.

### Summary

According to a first aspect disclosed herein, there is provided a display apparatus for rendering a 3D image from image data which specifies the 3D image as a plurality of volumetric pixels, voxels, at respective locations within the 3D image, each voxel comprising at least one of a luminance value and a colour value, the display apparatus comprising: at least one light source having a light emitter for outputting light and a receiver comprising a receiving coil for wirelessly receiving electrical power via electromagnetic induction; a transmitter comprising a transmitting coil for wirelessly transmitting electrical power to the light source via electromagnetic induction; a levitating arrangement constructed and arranged to controllably lift and move the light source within a display volume; and a controller constructed and arranged to wirelessly control the light source to render the 3D image within the display volume by: controlling the levitating arrangement to repeatedly move the light source through locations of a path traversing the display volume, wherein each of said locations of the path corresponds to one of said voxels of the 3D image; and simultaneously controlling transmission of electrical power by the transmitter to the light source, to cause the light source, at each of said locations of the path, to output light via the light emitter in accordance with the at least one of a luminance value or colour value of the voxel in the 3D image corresponding to that location.

In an example, the display apparatus comprises a plurality of light sources for outputting light which may be lifted and moved by the levitating arrangement and controlled by the controller.

In an example, the levitating arrangement is configured to arrange the plurality of light sources in at least one line when lifted by the levitating arrangement.

In an example, the levitating arrangement is configured to arrange the plurality of light sources in at least two lines when lifted by the levitating arrangement.

In an example, the levitating arrangement is configured to arrange the plurality of light sources in at least one plane when lifted by the levitating arrangement.

In an example, the levitating arrangement comprises a plurality of speakers constructed and arranged to move the light source via acoustic levitation. The speakers may emit sound having frequencies above the human hearing range (e.g. ultrasound) for the purposes of acoustic levitation. The speakers may emit no frequencies within the human hearing range.

In an example, the levitating arrangement comprises a plurality of electromagnets constructed and arranged to move the light source via magnetic levitation.

In an example, the at least one light source comprises at least one LED.

In an example, the at least one light source comprises at least two light emitters configured to generate visible-spectrum light of different wavelengths. The light source may comprise a red light emitter, a green light emitter, and a blue light emitter.

According to a second aspect disclosed herein, there is provided a method of operating the display apparatus of the first aspect by rendering a 3D image from image data which specifies the 3D image as a plurality of voxels at respective locations within the 3D image, each voxel comprising at least one of a luminance value and a colour value, the method comprising: controllably levitating at least one light source within a display volume to repeatedly move the light source to locations corresponding to said voxels of the 3D image, the light source having a light emitter for outputting light and a receiver comprising a receiving coil for wirelessly receiving electrical power via electromagnetic induction; and simultaneously wirelessly controlling the light source to render the 3D image within the display volume by controlling the transmission of electrical power to the light source by a transmitter comprising a transmitting coil for wirelessly transmitting electrical power to the light source via electromagnetic induction, to cause the light source to output light via the light emitter in accordance with the at least one of a luminance value or colour value for the voxel in the 3D image corresponding to that location.

In an example, the levitating and moving is carried out using acoustic levitation.

In an example, the 3D image is a static 3D image.

In an example, the 3D image is a video 3D image.

### Brief Description of the Drawings

To assist understanding of the present disclosure and to show how embodiments may be put into effect, reference is made by way of example to the accompanying drawings in which:
Figure 1 shows schematically an example of a display apparatus in accordance with an embodiment of the present invention;
Figure 2 is a schematic diagram illustrating acoustic levitation;
Figure 3 shows schematically an example of a light source for use in the display apparatus of Figure 1;
Figure 4 shows schematically operation of an example of a display apparatus in accordance with an embodiment of the present invention;
Figure 5 shows schematically an alternative light source for rendering colour 3D images;
Figure 6a shows schematically an example in which multiple light sources arranged in a line are used to render a 3D image; and
Figure 6b shows an example in which multiple light sources arranged in two lines are used to render a 3D image.

### Detailed Description

There is described herein a display apparatus for rendering a 3D image from image data which specifies the 3D image as at least one of a luminance value and a colour value at respective locations within the 3D image. The display apparatus has at least one light source for outputting light. A levitating arrangement controllably lifts and moves the light source to traverse positions within a display volume. A controller controls the light source to render the 3D image within the display volume by wirelessly controlling the light source, when located at a given position within the display volume, to output light in accordance with the at least one of a luminance value or colour value specified at the location in the 3D image data that corresponds to that position.

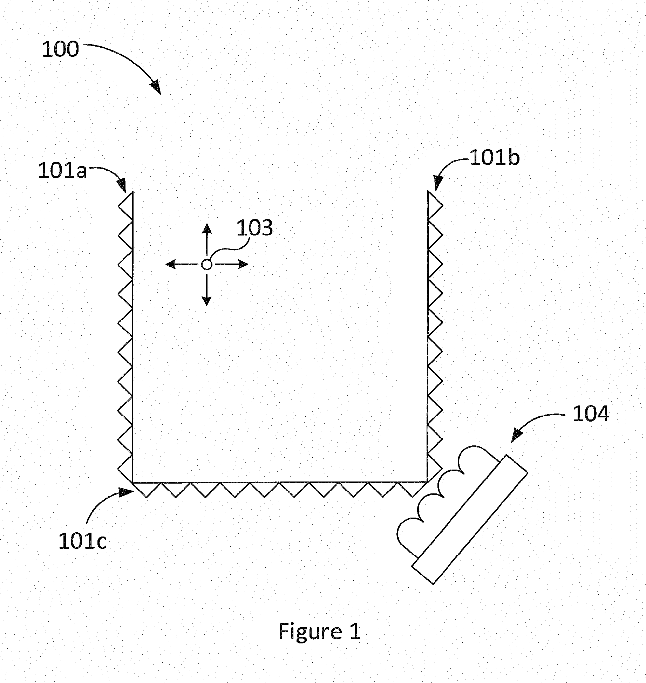

Figure 1 shows a display apparatus 100 in accordance with an example of the present invention. The apparatus 100 comprises a levitating arrangement 101, a light source 103, and a transmitter 104.

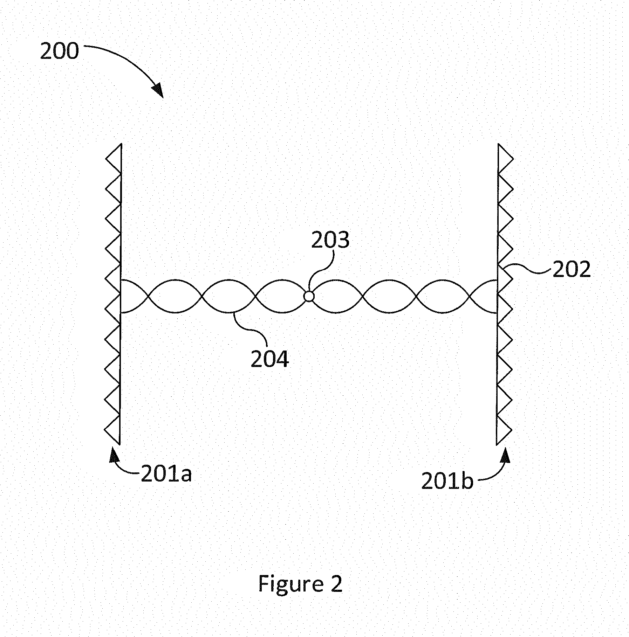

In this example, the levitating arrangement is a so-called acoustic levitation system for levitating a particle 203 using sound waves in a medium (e.g. air). Referring to Figure 2, an example acoustic levitation system is shown comprising two speaker arrays 201a, 201b each formed of a plurality of loudspeakers 202. Note that these are shown in only two dimensions for the sake of clarity (arranged in a row rather than an array).

The speaker arrays 201a, 201b are controlled to output sound waves into a levitation region (between the two arrays 201a, 201b) such that a standing wave 204 is formed in the levitation region. Note that an alternative to multiple speaker arrays is a single speaker array and a sound reflector for reflecting sound waves emitted by the single speaker array, as this arrangement is also capable of generating standing waves in the levitation region.

Further speaker arrays 201 (e.g. three, four, or more speaker arrays) may also be used to generate extra nodes which can be controlled to overlap in space to provide further restoring force and therefore stability.

In any case, a particle 203 located at a node of the standing wave 204 will experience a restoring force due to the increasing pressure around it. If the formed standing wave 204 is of sufficient amplitude, the particle 203 will remain at the node location (it will "levitate") even against the force of gravity. By manipulating the sound output by the speaker array(s) 201, the position of the node in which the particle 203 is located can be controlled. Hence, the position of the particle 203 within the levitation region can be controlled. This technique is referred to as acoustic levitation.

Acoustic levitation can be used to levitate small items such as polystyrene spheres, but can also be used to levitate larger items such as toothpicks, provided that the restorative force provided by the sound is sufficient to counteract the items weight. Thus, high amplitude sound waves are usually used, e.g. 160dB. Frequencies above the human hearing range (which typically extends to a maximum of 20kHz), i.e. ultrasound, can be used in order to minimise hearing damage when using such loud amplitudes.

Returning to Figure 1, the levitating arrangement 101 in this example is an acoustic levitation arrangement which comprises three speaker arrays 101a, 101b, 101c each comprising one or more loudspeakers for outputting sound into a display volume. The speaker arrays 101a, 101b, 101c may define the edges of the display volume, or the display volume may be a sub-region of the space enclosed by the speaker arrays 101a, 101b, 101c. For example, typically an acoustic levitation system can levitate particles anywhere in space from a maximum distance from the speakers up to a minimum distance from the speakers. The maximum distance is limited by the maximum amplitude of the sound emitted by the speakers, and the minimum distance is limited by how close to the speakers a node can be formed (which depends on the frequency of the emitted sound, for example).

Although shown comprising three speaker arrays 101a, 101b, 101c in Figure 1, it is appreciated that the levitating arrangement 101 need only comprise a single speaker 102 and a reflector for reflecting sound emitted by the speaker 102. However many speakers 102 are used and however they are arranged, the levitating arrangement 101 is constructed and arranged to controllably lift and move the light source 103 to traverse positions within the display volume.

In other examples, the levitating arrangement 101 uses a different arrangement to lift and move the light source 103, such as magnetic levitation. In such cases, the levitating arrangement 101 may not comprise any speakers. For example, in a magnetic levitation case, the levitating arrangement 101 comprises a plurality of electromagnets for generating a variable and controllable magnetic field within the display volume. Hence, the same effect of controllably lifting and moving the light source 103 can be achieved if the light source 103 itself is magnetic (e.g. constructed of or including a ferromagnetic material).

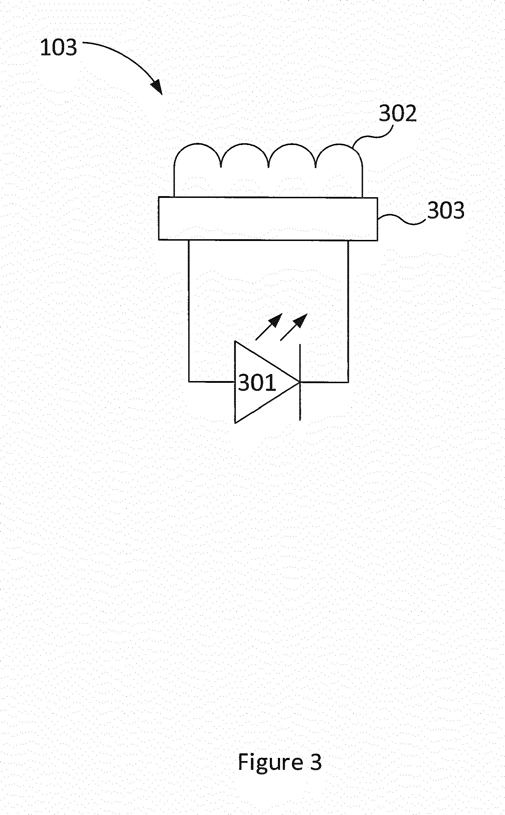

The light source 103 comprises at least one source of visible light for emitting visible light from within the display volume. The light source 103 may be for example an LED (light emitting diode). An example light source 103 is described in more detail below in relation to Figure 3.

The transmitter 104 is constructed and arranged to wirelessly control the light source 103 by at least controllably providing power to the light source 103 to thereby control the light emitted by the light source 103. In an example, the transmitter 104 comprises an induction coil for wirelessly transferring power to the light source 103 as described in more detail below in relation to Figure 3.

Hence, the light emitted by the light source 103 can be controlled by the transmitter 104 as the light source 103 is moved through the display volume by the levitating arrangement 101 in order to render a 3D image. That is, when located at a given position within the display volume (which corresponds to a particular location in the desired 3D image), the light source 103 is controlled by the transmitter 104 to output light in accordance with at least one of a luminance value or colour value at a location in the 3D image data which corresponds to that position of the light source 103.

Figure 3 shows an example light source 103 in more detail. The light source 103 comprises a light emitter 301, a receiver 302, and optionally a converter 303. The light emitter 301 is operatively coupled to the receiver 302, e.g. via a wired connection. When the converter 303 is present, the converter 303 is operatively coupled to each of the light emitter 301 and the receiver 302, e.g. via a wired connection.

The light emitter 301 in this example is a small, lightweight device for generating visible light in response to an electrical current. Examples of suitable devices include LEDs and OLEDs (organic light emitting diodes). A lightweight light emitter 301 is advantageous due to possible limitations of the levitating arrangement 101. For example, in general a magnetic levitation arrangement is typically able to lift and move heavier items than an acoustic levitation arrangement. Note that similar considerations apply to the light source 103 as a whole (i.e. to the receiver 302 and, when present, converter 303).

The receiver 302 is configured to wirelessly receive power and optionally control signals from the transmitter 104. As mentioned above, the transmitter 104 may comprise an induction coil. In these examples, the induction coil of the transmitter 104 is a transmitting induction coil and the receiver 302 comprises a receiving induction coil. Thus, power can be transferred to the light source 103 wirelessly by electromagnetic induction.

Inductive transfer of power requires the use of an alternating current (AC). If the light emitter 301 is not suitable to be run off AC power, then the converter 303 is used to convert received AC power at the receiver 302 into a form suitable for powering the light emitter 301. For example, the converter 303 may comprise a half- or full-bridge rectifier for converting the received AC current into direct current (DC) for powering the light emitter 301.

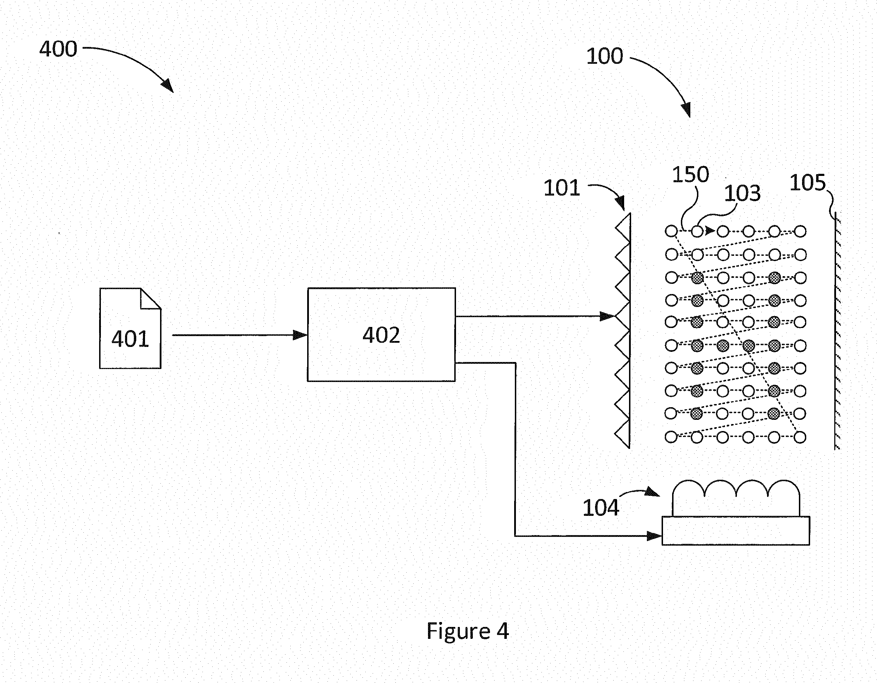

Figure 4 shows an example display system 400 in accordance with an example implementation of the present invention. The display system 400 comprises a controller 402 arranged to control the levitating arrangement 101 and the transmitter 104 of the display device 100 described above. In this example, the levitating arrangement 101 comprises a single array of speakers and an audio reflector 105 for reflecting sound generated by the speakers to thereby generate standing waves for lifting and moving the light source 103 (as described above).

The controller 402 is configured to access image data 401 defining a 3D image as at least one of a luminance value and a colour value at respective locations within the 3D image. The image data 401 may be accessed from a local memory or other data storage at the controller 402 or may be accessed over a wired or wireless network from a remote memory or other data storage.

The 3D image may be defined by the image data 401 as a plurality of "voxels" (volumetric pixels), each having a respective luminance value or colour value or both. When the 3D image is displayed within the display volume of the display device 100, each voxel location maps to a position within the display volume.

The controller 402 is configured to control the levitating arrangement 101 in order to move the light source 103 trapped at a node of a standing wave generated by the speakers of the levitating arrangement 101. This is done by controlling the sound emitted by the speakers such that the trapping node of the standing wave moves within the display volume. In this example, the light source 103 is moved along path 150. Sixty locations of the light source 103 as it moves are shown but, for the avoidance of doubt, note that in this example there is only a single light source 103. Note also that the movement along path 150 is only shown in 2D for the sake of clarity. The path 150 will, in general, traverse a 3D volume within the display region, the size of which depends on the particular 3D image to be rendered (the light source 103 need not be moved to locations outside the 3D image).

The controller 402 is also configured to control the light emitted by the light emitter 301 of the light source 103 via the transmitter 104 in accordance with the luminance and/or colour values of the 3D image data. For example, the controller 402 may control the levitating arrangement 101 to move the light source 103 to locations corresponding to each voxel of the 3D image in turn, while simultaneously controlling the transmitter 104 to vary the light emitted by the light source 103 to have the luminance value and/or colour value specified for that voxel location in the 3D image data 401. When this is performed sufficiently quickly, a human viewer sees the 3D image rendered due to persistence of vision.

In Figure 4, the light source 103 is moved through sixty voxel locations by the controller 402 using the levitating arrangement 101 whilst the light source 103 is turned on and off by the controller 402 using the transmitter 104 to form an image of the letter "H". The image may be a static image in which case the motion 150 and control of the light source 103 through the display volume is repeated as above. The number of repetitions of path 150 in a second defines a frame rate. For non-static (e.g. video) 3D images, the motion 150 may be repeated, but the control of the emitted light varies from frame to frame.

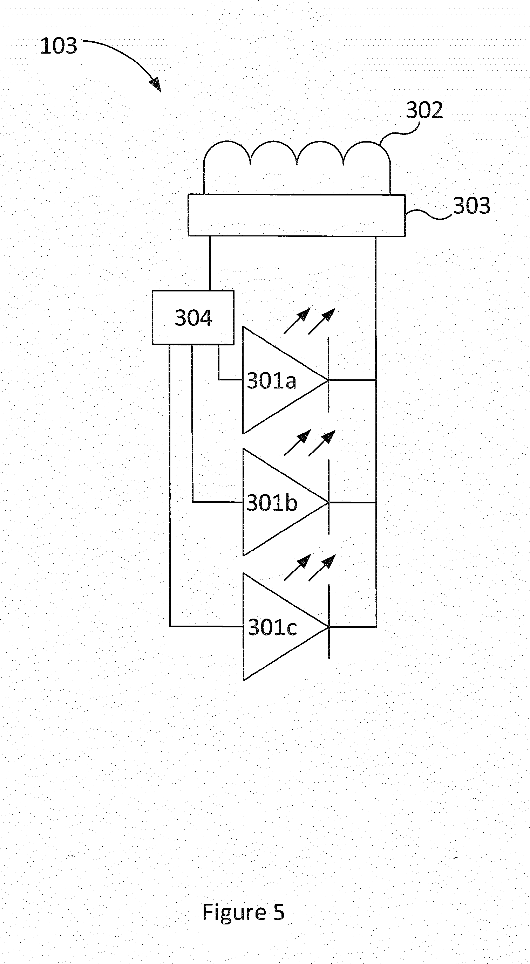

The display device 100 may also be used to display colour images. In such examples, the light source 103 is arranged as shown in Figure 5. The light source 103 of these examples comprises a plurality of light emitters 301 for emitting light of different respective colours (frequencies). In Figure 5, the light source 103 comprises a red LED 301, a green LED 301b, and a blue LED 301c. The receiver 302 and (optionally) converter 303 operate as before (see Figure 3). A light source controller 304 is additionally provided which is operatively coupled (e.g. via wired connections) to the receiver 302 (or converter 303 when present) and each of the LEDs 301a-c.

The light source controller 304 is configured to selectively provide power from the receiver 302 to each of the individual LEDs 301a-c in accordance with the image data. To do so, in this example the light source controller 304 is configured to receive a data signal e.g. via the receiver 302 using power modulation. This functionality may be provided by one or more separate receivers (not shown in Figure 5) such as an additional receiving antenna. In such cases, the data signal may be transmitted to the light source 103 using the transmitter 104, or may be transmitted using one or more separate transmitters (not shown) such as an additional transmitting antenna, for example using Bluetooth or WiFi.

The data signal specifies how much power to provide to each of the LEDs 301a-c. For example, the data signal may specify a colour as a HEX value (#RRGGBB) representing the proportions of Red, Green, and Blue components in a desired output colour (i.e. the colour required at the current voxel location of the light source 103).

The light source controller 304 is configured to interpret the data signal and selectively provide power from the receiver 302 to each of the LEDs 301a-c accordingly. Thus, the colour of the light output by the light source 103 can be controlled and therefore a colour 3D image can be rendered.

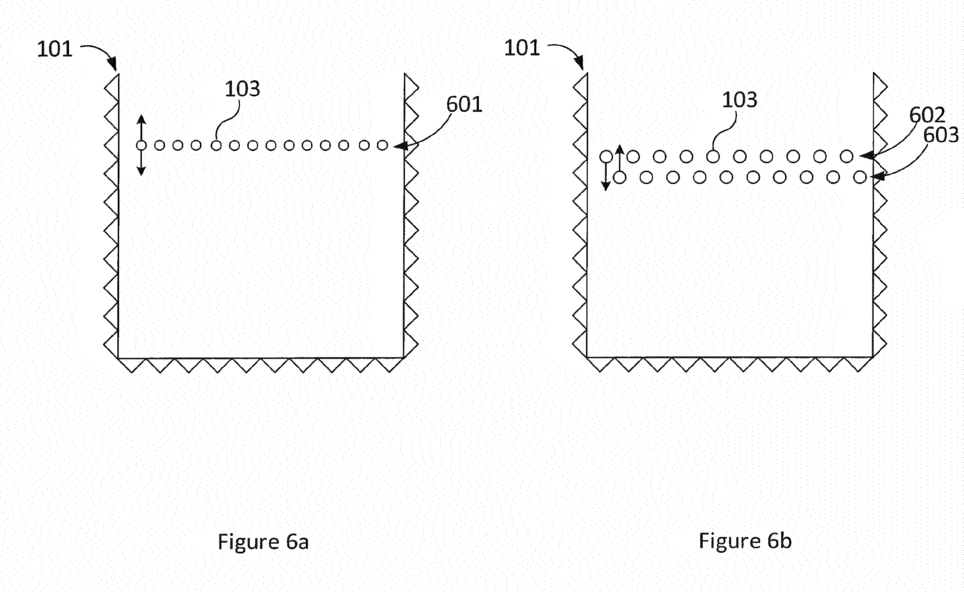

Some levitation arrangements 101 are capable of controlling the position of more than one item at once (e.g. an acoustic levitation arrangement). Hence, there may be more than one light source 103 present in the display volume at once. Two examples of this are shown schematically in Figure 6a and 7b.

In the example of Figure 6a, there are fourteen light sources 103 present. The position of each light source 103 is controlled by the levitating arrangement 101 and the light output of each light sources 103 is controlled by the transmitter 104 (not shown). The fourteen light sources 103 are arranged in a line 601. For example, each light source 103 may be trapped in a successive node of the standing wave (see, for illustration, the standing wave 204 shown in Figure 2). The line 601 of light sources 103 can thus be moved up and down within the display volume as a unit by simply varying the position of the standing wave.

In examples such as this in which there are multiple light sources 103 present, each light source 103 may additionally comprise a light source controller 304 similar to that mentioned above in relation to Figure 5 for receiving a wireless data signal. However, in these examples the light source controller 304 controls only at least the single light emitter 301 of the light source 103. Hence, the light output of each light source 103 can be individually controlled via the data signal(s) to each light source controller 304 even when the power transmitted to each light source 103 is the same.

In the example of Figure 6b, there are twenty light sources 103 present. Again, the position of each is controlled by the levitating arrangement 101 and the light output of each is controlled by the transmitted 104 (not shown). The twenty light sources 103 are arranged in two lines 602, 603. The first line 602 comprises ten light sources 103 and the second line 603 comprises ten light sources. The position of each line 602, 603 may be controlled by generating a respective first and second standing wave within the display volume.

As there are no guides or rails or other mechanical arrangement required to move the light sources 103 around, the lines 602, 603 can move around each other in space. Indeed, the lines 602, 603 may move "through" each other if the individual light sources 103 of one line are off-set with respect to the other as shown in Figure 6b.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors and a digital signal processor or processors, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example a hard disk and non-volatile semiconductor memory.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A display apparatus (100) for rendering a 3D image from image data (401) which specifies the 3D image as a plurality of volumetric pixels, voxels, at respective locations within the 3D image, each voxel comprising at least one of a luminance value and a colour value, the display apparatus (100) comprising:
at least one light source (103) having a light emitter (301) for outputting light and a receiver (302) comprising a receiving coil for wirelessly receiving electrical power via electromagnetic induction;
a transmitter (104) comprising a transmitting coil for wirelessly transmitting electrical power to the light source (103) via electromagnetic induction;
a levitating arrangement (101) constructed and arranged to controllably lift and move the light source (103) within a display volume; and
a controller (402) constructed and arranged to wirelessly control the light source (103) to render the 3D image within the display volume by: controlling the levitating arrangement (101) to repeatedly move the light source (103) through locations of a path (150) traversing the display volume, wherein each of said locations of the path (150) corresponds to one of said voxels of the 3D image; and simultaneously controlling the transmission of electrical power by the transmitter (104) to the light source (103), to cause the light source (103), at each of said locations of the path (150), to output light via the light emitter (301) in accordance with the at least one of a luminance value or colour value of the voxel in the 3D image corresponding to that location.

2. A display apparatus (100) according to claim 1, comprising a plurality of light sources (103) for outputting light which may be lifted and moved by the levitating arrangement (101) and controlled by the controller (400).

3. A display apparatus (100) according to claim 2, wherein the levitating arrangement (101) is configured to arrange the plurality of light sources (103) in at least one line when lifted by the levitating arrangement (101).

4. A display apparatus (100) according to claim 3, wherein the levitating arrangement (101) is configured to arrange the plurality of light sources (103) in at least two lines when lifted by the levitating arrangement (101).

5. A display apparatus (100) according to any of claims 2 to 4, wherein the levitating arrangement (101) is configured to arrange the plurality of light sources (103) in at least one plane when lifted by the levitating arrangement (101).

6. A display apparatus (100) according to any of claims 1 to 5, wherein the levitating arrangement (101) comprises a plurality of speakers (202) constructed and arranged to move the light source (103) via acoustic levitation.

7. A display apparatus (100) according to any of claims 1 to 5, wherein the levitating arrangement (101) comprises a plurality of electromagnets constructed and arranged to move the light source (103) via magnetic levitation.

8. A display apparatus (100) according to any of claims 1 to 7, wherein the at least one light source (103) comprises at least one LED.

9. A display apparatus (100) according to any of claims 1 to 8, wherein the at least one light source (103) comprises at least two light emitters configured to generate visible-spectrum light of different wavelengths.

10. A method of operating the display apparatus of claim 1 by rendering a 3D image from image data (401) which specifies the 3D image as a plurality of voxels at respective locations within the 3D image, each voxel comprising at least one of a luminance value and a colour value, the method comprising:
controllably levitating at least one light source (103) within a display volume to repeatedly move the light source (103) to locations corresponding to said voxels of the 3D image , the light source (103) having a light emitter (301) for outputting light and a receiver (302) comprising a receiving coil for wirelessly receiving electrical power via electromagnetic induction; and
simultaneously wirelessly controlling the light source (103) to render the 3D image within the display volume by controlling the transmission of electrical power to the light source (103) by a transmitter (104) comprising a transmitting coil for wirelessly transmitting electrical power to the light source (103) via electromagnetic induction, to cause the light source (103) to output light via the light emitter (301) in accordance with the at least one of a luminance value or colour value for the voxel in the 3D image corresponding to that location.

11. A method according to claim 10, wherein the levitating and moving is carried out using acoustic levitation.

12. A method according to claim 10 or claim 11, wherein the 3D image is a static 3D image.

13. A method according to claim 10 or claim 11, wherein the 3D image is a video 3D image.

## Patentansprüche

1. Anzeigevorrichtung (100) zum Rendern eines 3D-Bildes aus Bilddaten (401), die das 3D-Bild als mehrere volumetrische Pixel, Voxel, an jeweiligen Stellen innerhalb des 3D-Bildes spezifizieren, wobei jedes Voxel wenigstens eines von einem Luminanzwert und einem Farbwert aufweist, wobei die Anzeigevorrichtung (100) aufweist:
wenigstens eine Lichtquelle (103) mit einem Lichtsender (301) zum Ausgeben von Licht und einem Empfänger (302), der eine Empfangsspule zum drahtlosen Empfangen von elektrischer Energie über elektromagnetische Induktion aufweist;
einen Sender (104), der eine Sendespule zum drahtlosen Übertragen von elektrischer Energie an die Lichtquelle (103) über elektromagnetische Induktion aufweist;
eine Schwebeanordnung (101), die konstruiert und angeordnet ist, um die Lichtquelle (103) innerhalb eines Anzeigevolumens steuerbar anzuheben und zu bewegen; und
eine Steuerung (402), die konstruiert und eingerichtet ist, um die Lichtquelle (103) drahtlos zu steuern, um das 3D-Bild innerhalb des Anzeigevolumens zu rendern durch: Steuern der Schwebeanordnung (101), um die Lichtquelle (103) wiederholt durch Stellen eines Pfades (150) zu bewegen, der das Anzeigevolumen durchquert, wobei jede der Stellen des Pfades (150) einem der Voxel des 3D-Bildes entspricht; und gleichzeitiges Steuern der Übertragung von elektrischer Energie durch den Sender (104) an die Lichtquelle (103), um die Lichtquelle (103) an jeder der Stellen des Pfades (150) zu veranlassen, Licht über den Lichtsender (301) in Übereinstimmung mit dem wenigstens einen von einem Luminanzwert oder einem Farbwert des Voxels im 3D- Bild, das dieser Stelle entspricht, auszugeben.

2. Anzeigevorrichtung (100) nach Anspruch 1, aufweisend mehrere Lichtquellen (103) zum Ausgeben von Licht, das durch die Schwebeanordnung (101) angehoben und bewegt und durch die Steuerung (400) gesteuert werden kann.

3. Anzeigevorrichtung (100) nach Anspruch 2, bei welcher die Schwebeanordnung (101) konfiguriert ist, um die mehreren Lichtquellen (103) in wenigstens einer Linie anzuordnen, wenn sie durch die Schwebeanordnung (101) angehoben werden.

4. Anzeigevorrichtung (100) nach Anspruch 3, bei welcher die Schwebeanordnung (101) konfiguriert ist, um die mehreren Lichtquellen (103) in wenigstens zwei Linien anzuordnen, wenn sie durch die Schwebeanordnung (101) angehoben werden.

5. Anzeigevorrichtung (100) nach einem der Ansprüche 2 bis 4, bei welcher die Schwebeanordnung (101) konfiguriert ist, um die mehreren Lichtquellen (103) in wenigstens einer Ebene anzuordnen, wenn sie durch die Schwebeanordnung (101) angehoben werden.

6. Anzeigevorrichtung (100) nach einem der Ansprüche 1 bis 5, bei welcher die Schwebeanordnung (101) mehrere Lautsprecher (202) aufweist, die konstruiert und angeordnet sind, um die Lichtquelle (103) über akustisches Schweben zu bewegen.

7. Anzeigevorrichtung (100) nach einem der Ansprüche 1 bis 5, bei welcher die Schwebeanordnung (101) mehrere Elektromagneten aufweist, die konstruiert und angeordnet sind, um die Lichtquelle (103) über magnetisches Schweben zu bewegen.

8. Anzeigevorrichtung (100) nach einem der Ansprüche 1 bis 7, bei welcher die wenigstens eine Lichtquelle (103) wenigstens eine LED aufweist.

9. Anzeigevorrichtung (100) nach einem der Ansprüche 1 bis 8, bei welcher die wenigstens eine Lichtquelle (103) wenigstens zwei Lichtemitter aufweist, die konfiguriert sind, um Licht im sichtbaren Spektrum mit unterschiedlichen Wellenlängen zu erzeugen.

10. Verfahren zum Betreiben der Anzeigevorrichtung nach Anspruch 1 durch Rendern eines 3D-Bildes aus Bilddaten (401), die das 3D- Bild als mehrere Voxel an jeweiligen Stellen innerhalb des 3D-Bildes spezifizieren, wobei jedes Voxel wenigstens eines von einem Luminanzwert und einem Farbwert aufweist, wobei das Verfahren aufweist:
steuerbares Schweben wenigstens einer Lichtquelle (103) innerhalb eines Anzeigevolumens, um die Lichtquelle (103) wiederholt an Stellen zu bewegen, die den Voxeln des 3D-Bildes entsprechen, wobei die Lichtquelle (103) einen Lichtsender (301) zum Ausgeben von Licht und einen Empfänger (302) mit einer Empfangsspule zum drahtlosen Empfangen von elektrischer Energie über elektromagnetische Induktion hat; und
gleichzeitig drahtloses Steuern der Lichtquelle (103), um das 3D-Bild innerhalb des Anzeigevolumens zu rendern durch Steuern der Übertragung von elektrischer Energie an die Lichtquelle (103) durch einen Sender (104), der eine Sendespule zum drahtlosen Übertragen von elektrischer Energie an die Lichtquelle (103) über elektromagnetische Induktion aufweist, um die Lichtquelle (103) zu veranlassen, Licht über den Lichtsender (301) in Übereinstimmung mit dem wenigstens einen von einem Luminanzwert oder einem Farbwert für das Voxel im 3D-Bild, das dieser Stelle entspricht, auszugeben.

11. Verfahren nach Anspruch 10, bei welchem das Schweben und Bewegen unter Verwendung von akustischem Schweben durchgeführt wird.

12. Verfahren nach Anspruch 10 oder Anspruch 11, bei welchem das 3D-Bild ein statisches 3D-Bild ist.

13. Verfahren nach Anspruch 10 oder Anspruch 11, bei welchem das 3D- Bild ein Video-3D-Bild ist.

## Revendications

1. Appareil d'affichage (100) servant à obtenir un rendu d'une image 3D à partir de données d'image (401) qui spécifient l'image 3D en tant qu'une pluralité de pixels volumétriques qui sont des voxels, à des emplacements respectifs au sein de l'image 3D, chaque voxel comprenant au moins l'une d'une valeur de luminance et d'une valeur de couleur, l'appareil d'affichage (100) comprenant :
au moins une source de lumière (103) ayant un émetteur de lumière (301) servant à délivrer de la lumière et un moyen de réception (302) comprenant une bobine de réception servant à recevoir de manière sans fil de la puissance électrique par induction électromagnétique ;
un moyen de transmission (104) comprenant une bobine de transmission servant à transmettre de manière sans fil de la puissance électrique vers la source de lumière (103) par induction électromagnétique ;
un agencement de lévitation (101) construit et agencé pour soulever et déplacer de manière contrôlable la source de lumière (103) à l'intérieur d'un volume d'affichage ; et
un contrôleur (402) construit et agencé pour contrôler de manière sans fil la source de lumière (103) afin d'obtenir un rendu de l'image 3D à l'intérieur du volume d'affichage en :
contrôlant l'agencement de lévitation (101) pour déplacer de manière répétée la source de lumière (103) à travers des emplacements d'un trajet (150) traversant le volume d'affichage, dans lequel chacun desdits emplacements du trajet (150) correspond à l'un desdits voxels de l'image 3D ; et
contrôlant de manière simultanée la transmission de puissance électrique par le moyen de transmission (104) vers la source de lumière (103) afin d'amener la source de lumière (103), à chacun desdits emplacements du trajet (150), à délivrer de la lumière par le biais de l'émetteur de lumière (301) conformément à ladite au moins l'une d'une valeur de luminance ou d'une valeur de couleur du voxel dans l'image 3D correspondant à cet emplacement.

2. Appareil d'affichage (100) selon la revendication 1, comprenant une pluralité de sources de lumière (103) servant à délivrer de la lumière qui peut être soulevée et déplacée par l'agencement de lévitation (101) et contrôlée par le contrôleur (400).

3. Appareil d'affichage (100) selon la revendication 2, dans lequel l'agencement de lévitation (101) est configuré pour agencer la pluralité de sources de lumière (103) sur au moins une ligne lorsqu'elles sont soulevées par l'agencement de lévitation (101).

4. Appareil d'affichage (100) selon la revendication 3, dans lequel l'agencement de lévitation (101) est configuré pour agencer la pluralité de sources de lumière (103) sur au moins deux lignes lorsqu'elles sont soulevées par l'agencement de lévitation (101).

5. Appareil d'affichage (100) selon l'une quelconque des revendications 2 à 4, dans lequel l'agencement de lévitation (101) est configuré pour agencer la pluralité de sources de lumière (103) dans au moins un plan lorsqu'elles sont soulevées par l'agencement de lévitation (101).

6. Appareil d'affichage (100) selon l'une quelconque des revendications 1 à 5, dans lequel l'agencement de lévitation (101) comprend une pluralité de haut-parleurs (202) construits et agencés pour déplacer la source de lumière (103) par lévitation acoustique.

7. Appareil d'affichage (100) selon l'une quelconque des revendications 1 à 5, dans lequel l'agencement de lévitation (101) comprend une pluralité d'électroaimants construits et agencés pour déplacer la source de lumière (103) par lévitation magnétique.

8. Appareil d'affichage (100) selon l'une quelconque des revendications 1 à 7, dans lequel ladite au moins une source de lumière (103) comprend au moins une LED.

9. Appareil d'affichage (100) selon l'une quelconque des revendications 1 à 8, dans lequel ladite au moins une source de lumière (103) comprend au moins deux émetteurs de lumière configurés pour générer de la lumière visible de différentes longueurs d'onde.

10. Procédé de fonctionnement de l'appareil d'affichage selon la revendication 1 pour obtenir un rendu d'une image 3D à partir de données d'image (401) qui spécifient l'image 3D en tant qu'une pluralité de voxels à des emplacements respectifs au sein de l'image 3D, chaque voxel comprenant au moins l'une d'une valeur de luminance et d'une valeur de couleur, le procédé consistant à :
faire léviter de manière contrôlable au moins une source de lumière (103) à l'intérieur d'un volume d'affichage pour déplacer de manière répétée la source de lumière (103) vers des emplacements correspondant auxdits voxels de l'image 3D, la source de lumière (103) ayant un émetteur de lumière (301) servant à délivrer de la lumière et un moyen de réception (302) comprenant une bobine de réception servant à recevoir de manière sans fil de la puissance électrique par induction électromagnétique ; et
contrôler de manière sans fil et simultanément la source de lumière (103) pour obtenir un rendu de l'image 3D à l'intérieur du volume d'affichage en contrôlant la transmission de puissance électrique vers la source de lumière (103) par un transmetteur (104) comprenant une bobine de transmission servant à transmettre sans fil de la puissance électrique vers la source de lumière (103) par induction électromagnétique, afin d'amener la source de lumière (103) à délivrer de la lumière par le biais de l'émetteur de lumière (301) conformément à ladite au moins l'une d'une valeur de luminance ou d'une valeur de couleur du voxel dans l'image 3D correspondant à cet emplacement.

11. Procédé selon la revendication 10, dans lequel la lévitation et le déplacement sont effectués par lévitation acoustique.

12. Procédé selon la revendication 10 ou 11, dans lequel l'image 3D est une image 3D statique.

13. Procédé selon la revendication 10 ou 11, dans lequel l'image 3D est une image 3D vidéo.
